# EUROPEAN PATENT APPLICATION

(11) **EP 1 029 905 A1**
(43) Date of publication of application: **23.08.2000**
(21) Application number: 99811178.5
(22) Date of filing: 20.12.1999
(51) Int. Cl.: C09G 3/00, C10M 101/02

(54) **Use of fluorinated solvents for applications of fluorinated waxes on skis**

(30) Priority: 18.02.1999 CH 30799
(71) Applicant: Centeiro Trading LDA, 9000 Funchal/Madeira (PT)
(72) Inventor:
(74) Representative: Gaggini, Carlo, Ing.

(57) **Abstract**

The present invention concerns the use of fluorinated solvents for the application of fluorinated waxes in the field of skis.

The ski waxes consisting of fluorinated waxes, normally used for improving the gliding properties of the skis, present the disadvantage that their application to the ski soles is difficult without impairing the physico-mechanical characteristics of the sole.

It thus is the objective of the present invention to render feasible the application of said fluorinated waxes using spray cans.

This objective is achieved owing to the fact that the fluorinated solvents used are linear, branched cross-linked or cyclic perfluorinated compounds presenting a boiling interval ranging between 30°C and 150°C and preferably between 50°C and 100°C and that the mixtures of waxes and solvents are stored in spray cans and are sprayed onto the ski soles as aerosols or as sprays.

## Description

The present invention concerns the use of fluorinated solvents for the application of fluorinated waxes on skis.

In the field of skiing the substances called "ski waxes" are well known which serve for improving the gliding properties of the ski by lowering the friction coefficients between the ski sole and the snow surface.

As a rule the sole of the ski consists of polyethylene of highest molecular weight and the ski waxes which are applied thereto are to fulfil the following functions:
1. To eliminate surface roughness and irregularities of the sole in such a manner that the sole is rendered perfectly smooth and thus is less subject to resistance due to mechanical friction.
2. To lower the surface tension in such a manner that adhesion to the snow surface is reduced owing to the lower interfacial energy, which is of chemical nature, between the two surfaces.
3. To act as an actual lubricant proper (liquid or solid depending on the types used) provided between the ski sole and the snow surface.

The first ski waxes used in this field, and the ones used most commonly today, consist of paraffins which differ in their
- Distribution curve of molecular weights of their components
- Contents of branching of cross-links
- Possible oil contents
- Degree of crystallisation and melting point which depend on the three points listed above.

From 1985 on in addition to such paraffin ski waxes also fluorinated ski waxes came into use, the so-called "fluorinated waxes", in which the hydrogen atoms of the paraffin are substituted entirely by fluorine atoms.

These fluorinated waxes offer an extremely low surface tension which of course results in a lower coefficient of friction of the ski on the snow.

These waxes, however, present as a disadvantage a high vapour pressure in conjunction with a high melting point and insolubility with the hydrogenated paraffins.

For improving the characteristics of applicability of these waxes products with mixed chains were developed over the past few years hydrogenated in part and fluorinated in part which serve for binding the waxes to the paraffins and for improving the characteristics thereof by lowering volatility as well as the melting point.

A most important characteristic concerning the quality of a ski wax is that it can be applied to the sole of the ski without impairing the physico-mechanical properties of the latter.

Thus e.g. application of a hydrogenated paraffin to the sole of the ski can be effected as long as its melting point is not above 105° to 110°C.

If, however, the temperature for melting the paraffin and to have it absorbed by the sole of the ski is increased to 118° to 120°C the danger arises that the sole separates from the ski or at least that the surface of the sole possibly is impaired the initial characteristics of the sole being lost.

Recently also paraffins have been marketed which can be sprayed on which are to present the following advantages:
a) Distribute the paraffin more uniformly over the sole reduced quantities being consumed.
b) Realisation of applicable solutions of paraffins of high molecular weight which could not be applied in powder form just because of the high molecular weight of the paraffins.

These solutions of sprays available on the market, however, present the following disadvantages:
c) They contain in many cases toxic substances such as chlorinated or aromatic solvents, and in many cases are inflammable.
d) After application to the sole of the ski even after the solvent has evaporated part of the solvent still remains solved in the paraffin modifying the characteristics of the latter.

Up to now it proved impossible to produce such fluorinated waxes in sprayable form, as it had been possible with the paraffins, because the perfluorinated waxes are not soluble in any hydrogenated organic solvent.

It thus is the objective of the present invention to achieve in the field of the fluorinated waxes the spray application technology of the waxes and to eliminate the above mentioned disadvantages of the known solutions used with paraffins.

The main advantages achieved according to the present invention are:
1. The liquids applied are absolutely non-toxic
2. The possibility of maintaining in solution and/or in suspension waxes of very high melting point (150° to 160°C) in such a manner that they can be applied to the ski sole without ruining or impairing the latter proves to be much more important in the field of the waxes than in the field of the paraffins in so far as, at the same melting point, the volatility of the waxes is much higher (C₁₂H₂₅: boiling point = 216°C, melting point = - 10°C; C₁₂F₂₅: boiling point = 178°C, melting point = 75°C).
3. The liquids used are much more volatile than the ones used in the case of the paraffins and thus immediately after application the wax remains pure without any solvent impregnating it.
4. If any trace of solvent should remain in the wax the surface tension of the liquids and of the waxes are similar and thus there will be no deviation in the coefficient of friction.
5. This system of application, as mentioned under point 2, permits attachment to the sole of products of high melting points, and thus of low volatility, which was the cause of the main disadvantage of the waxes applied in powder form.
6. The waxes of lower molecular weight (e.g. C₁₂F₂₆) behave as co-solvents for the ones of progressively higher molecular weight which thus also can be kept solved, even if isolated for themselves they would be poorly soluble such as e.g. C₁₆F₃₄ and C₁₈F₃₈.

The present invention will be described in more detail in the following with reference to several examples of realisation.

### Examples:

*Example No. 1*: 100 g of the wax C₁₂F₂₆ of a melting point of 75°C is solved in 400 g of RM 101 (consisting of a mixture of perfluoroalchyl, furan and pyran, of a boiling point = 101°C) until dissolved completely and then let cooling down to 20°C under agitation.

The solution obtained is fluid without a beginning of precipitation and can be stored in spray cans and can be applied as such.

*Example No. 2*: In an operation as described in the example No. 1, 100 g of the wax C₁₂F₂₆ are solved in 400 g of Fomblin HT 55° (melting point 55°C) until dissolved completely and then are let cooling down to 20°C under agitation.

Also in this case the solution remains liquid and can be stored in spray cans for use.

*Example No. 3*: 80 g of the following product C₈F₁₂ - (CH₂)₃ - (CH₁₂) - C₈F₁₇ of a melting point of 89° to 90°C and a boiling point of 260°C are solved in 320 g of perfluoroheptane (boiling point = 82°C) until dissolved completely and then let cooling down to 20°C.

Also in this case the solution remains liquid and can be stored in spray cans ready for use.

*Example No. 4*: 50 g of pure C₁₆F₃₄ of a melting point of 125°C are solved in 350 g HT55 until dissolved completely and then cooled abruptly down to 10°C in which process an unstable milky suspension is obtained in which the dissolved wax represents only 40% of the total.

This suspension also can be stored in spray cans and can be sprayed onto the ski sole, but only after shaking vigorously.

*Example No. 5*: 50 g of a mixture of fluorinated waxes of the following composition: C₁₂ = 22%, C₁₄ = 37%, C₁₆ = 12%, C₂₀ = 4%, with a melting interval of 97° to 98°C is solved in 350 g of HT55 until dissolved completely and then is cooled abruptly down to 10°C. In this manner a stable liquid milky suspension is obtained in which less than 10% of the wax is not dissolved.

From this it is evident how the waxes of lower molecular weight (e.g. C₁₂F₂₆ ) serve as co-solvents for the waxes of progressively higher molecular weight as they can maintain in the dissolved state these waxes which on their own would be soluble only by a very small degree such as the C₁₆F₃₄ and the C₁₈F₃₈.

## Claims

1. Use of fluorinated solvents for application of fluorinated waxes on skis,
characterized in that
the fluorinated solvents used are linear, branched cross-linked or cyclic perfluorinated compounds presenting a boiling interval ranging from 30°C to 150°C and preferentially ranging between 50°C and 100°C and that these are stored in spray cans and are sprayed as waxes onto the ski soles as aerosols or as sprays.

2. Use of fluorinated solvents according to the claim 1,
characterized in that
these solvents contain N₂ and O₂ atoms in the molecules.

3. Use of fluorinated solvents according to the claim 1,
characterized in that
the mixtures of waxes and solvents under normal conditions can be constituted in part by a suspension.

4. Use of fluorinated solvents according to the claim 1,
characterized in that
the fluorinated waxes are perfluorinated or are mixtures of the type R_{f} - R_{H} and R_{f} - R_{H} - R_{F}.

5. Use of fluorinated solvents according to the claims 1 and/or 3.
characterized in that
for obtaining the solutions and/or the suspensions of fluorinated waxes components are used the toxicity of which is nil and which are not inflammable.
